# EUROPÄISCHE PATENTANMELDUNG

(11) **EP 4 523 803 A1**
(43) Veröffentlichungstag der Anmeldung: **19.03.2025**
(21) Anmeldenummer: 23196909.8
(22) Anmeldetag: 12.09.2023
(51) Int. Cl.: B06B 1/06, G01H 11/08

(54) **ULTRASCHALL-WANDLERSYSTEM UND VERFAHREN ZUR ÜBERWACHUNG EINES ULTRASCHALL-WANDLERSYSTEMS**

(71) Anmelder: Weber Ultrasonics AG, 76307 Karlsbad-Ittersbach (DE)
(72) Erfinder: MAUDERER, Günter, 76316 Malsch (DE); DREYER, Thomas, 76185 Karlsruhe (DE)
(74) Vertreter: LBP Lemcke, Brommer & Partner Patentanwälte mbB

(57) **Zusammenfassung**

Vorgeschlagen wird ein Ultraschall-Wandlersystem (1) mit mindestens einem Generator (2), mindestens einem Wandlerelement (3), mindestens einer Messeinheit (6) und mindestens einer Analyseeinheit (8, 10), wobei der Generator (2) und das Wandlerelement (3) energietechnisch miteinander verbunden sind und der Generator (2) dazu ausgebildet ist, elektrische Energie für das Wandlerelement (3) bereitzustellen und das Wandlerelement (3) dazu ausgebildet ist, die mittels des Generators (2) bereitgestellte elektrische Energie in eine mechanische Schwingung zu wandeln, und wobei die Messeinheit (5) und die Analyseeinheit (8, 10) signaltechnisch miteinander verbunden sind und die Messeinheit (5) dazu vorgesehen ist, das Wandlerelement (3) messtechnisch zu überwachen und Messdaten an die Analyseeinheit (8, 10) zu übermitteln und die Analyseeinheit (8, 10) dazu eingerichtet ist, die von der Messeinheit (6) bereitgestellten Messdaten auszuwerten.

## Beschreibung

Die Erfindung betrifft ein Ultraschall-Wandlersystem sowie ein Verfahren zur Überwachung eines Ultraschall-Wandlersystems.

Ultraschall-Wandlersysteme kommen in verschiedenen industriellen Anwendungen, etwa in der Reinigungs- oder Prozesstechnik, zum Einsatz und umfassen typischerweise jeweils einen Generator und zumindest ein oder mehrere Wandlerelemente. Der Generator dient hierbei zur Erzeugung einer hochfrequenten elektrischen Wechselspannung, die an das Wandlerelement angelegt und mittels dessen in eine mechanische Schwingung gewandelt wird.

Die mechanische Schwingung kann zur Erzeugung von Schallwellen in flüssigen oder festen Medien aber auch Suspensionen oder Dispersionen dienen. Ein in das Medium eingebrachtes Werkstück kann durch Wirkung der Schallwellen gereinigt werden. Ebenso ist denkbar, dass ein zu verarbeitendes Medium angeregt wird und durch Einwirkung der Schallwellen das Medium selbst in seinen chemischen oder physikalischen Eigenschaften verändert wird.

Unabhängig von der Anwendung ist es gewünscht, dass der Betrieb des Ultraschall-Wandlersystems mit einer hohen Zuverlässigkeit einhergeht. Insbesondere soll die erzeugte mechanische Schwingung bedarfsgerecht eingestellt werden können und über die Betriebsdauer des Ultraschall-Wandlersystems zum Beispiel keine unerwünschten Abweichungen in Hinblick auf die Schwingungsamplituden und Frequenzen aufweisen.

Eine Herausforderung besteht darin, dass Ultraschall-Wandlersysteme in verschiedenen Anwendungen unterschiedlichen Einflüssen ausgesetzt sind, deren Auswirkungen oft schwer oder sogar unmöglich vorherzusagen sind. Die besagten Einflüsse können zum Beispiel aus den Umgebungsbedingungen, der Handhabung des Ultraschall-Wandlersystems durch einen Benutzer oder anderen Betriebsbedingungen resultieren. Da viele dieser Einflüsse miteinander in Wechselwirkung stehen und ihre Auswirkungen auf das Ultraschall-Wandlersystem oft komplex und nicht-linear sind, gestaltet sich die zuverlässige Vorhersage ihrer langfristigen Auswirkungen auf das Ultraschall-Wandlersystem schwierig. Selbst bei sorgfältiger Konstruktion und Materialauswahl besteht häufig das Risiko von unerwarteten Verschleißerscheinungen, Leistungsabfällen oder sogar schwerwiegenderen Schäden am Ultraschall-Wandlersystem.

Es ist deshalb eine Aufgabe der Erfindung, ein Ultraschall-Wandlersystem mit einer hohen Betriebszuverlässigkeit sowie ein Verfahren zur Steigerung der Betriebszuverlässigkeit vorzuschlagen.

Die Aufgabe wird gelöst mittels eines Ultraschall-Wandlersystems gemäß Anspruch 1 und einem Verfahren gemäß Anspruch 17. Vorteilhafte Weiterbildungen sind jeweils Gegenstände abhängiger Ansprüche.

Das erfindungsgemäße Ultraschall-Wandlersystem umfasst mindestens einen Generator, mindestens ein Wandlerelement, mindestens eine Messeinheit und mindestens eine Analyseeinheit. Der Generator und das Wandlerelement sind energietechnisch miteinander verbunden. Der Generator ist dazu ausgebildet, elektrische Energie für das Wandlerelement bereitzustellen. Das Wandlerelement dient dazu, die mittels des Generators bereitgestellte elektrische Energie in eine mechanische Schwingung zu wandeln. Die Messeinheit und die Analyseeinheit sind signaltechnisch miteinander verbunden. Die Messeinheit ist dazu vorgesehen, das Wandlerelement messtechnisch zu überwachen und Messdaten an die Analyseeinheit zu übermitteln. Die Analyseeinheit ist dazu eingerichtet, die von der Messeinheit bereitgestellten Messdaten auszuwerten.

Es ist ein Vorteil der Erfindung, dass es mittels der Messeinheit und der Analyseeinheit möglich ist, das Ultraschall-Wandlersystem an einer ausfallkritischen Systemkomponente, nämlich dem Wandlerelement, zu überwachen und frühzeitig erkennen zu können, ob Abweichungen im Betrieb des Ultraschall-Wandlersystems aufgetreten oder zu erwarten sind.

Eine messtechnische Überwachung des Wandlerelementes ermöglicht es, potenzielle Probleme oder Fehlfunktionen des Wandlerelementes zu identifizieren, noch bevor sie zu schwerwiegenderen Ausfällen oder Störungen führen können. Dadurch können rechtzeitig geeignete Maßnahmen ergriffen werden, um das Auftreten und die Ausbreitung von Schäden am Wandlerelement zu vermeiden und die Zuverlässigkeit des gesamten Ultraschall-Wandlersystems zu erhöhen. Die Möglichkeit, Abweichungen im Betrieb des Ultraschall-Wandlersystems zu erkennen, erlaubt es auch, proaktiv Wartungsarbeiten durchzuführen und Reparaturen zu planen, was zu einer verbesserten Verfügbarkeit und Effizienz des Ultraschall-Wandlersystems führt. Letztendlich trägt dies dazu bei, die Sicherheit und Leistungsfähigkeit der Anlage, in der das Ultraschall-Wandlersystem eingesetzt wird, zu erhöhen und mögliche Ausfallzeiten zu minimieren.

Die Erfindung ist grundsätzlich nicht darauf beschränkt, wie die Messeinheit ausgebildet ist oder auf welche Weise diese mit dem Wandlerelement in Wirkverbindung steht, um dieses zu überwachen. Vielmehr besteht eine erfindungsbegründende Erkenntnis bereits darin, dass der Einsatz einer Messeinheit und damit signaltechnisch verbundener Analyseeinheit zu signifikanten Vorteilen gegenüber herkömmlichen Ultraschall-Wandlersystemen führt.

Es liegt im Rahmen der Erfindung, dass die Messeinheit in räumlicher Nähe zu dem Wandlerelement angeordnet ist und einen Erfassungsbereich aufweist, in dem das Wandlerelement angeordnet ist. Insbesondere kann die Messeinheit und das Wandlerelement baulich zu einer Einheit zusammengefasst sein, etwa durch ein gemeinsames Gehäuse und/oder eine mechanische Anbindung zwischen der Messeinheit und dem Wandlerelement. Es liegt auch im Rahmen der Erfindung, dass die Messeinheit beabstandet von dem Wandlerelement angeordnet ist. Dies ist etwa dann denkbar, wenn die Messeinheit dazu ausgestaltet ist, eine Messgröße zu erfassen, die nicht unmittelbar am Wandlerelement gemessen werden muss. Hierzu gehört zum Beispiel eine elektrische Kenngröße einer hochfrequenten Wechselspannung, die an dem Wandlerelement anliegt, jedoch am Generator gemessen werden kann oder etwa der hochfrequente Strom, der durch das Wandlerelement fließt.

Insbesondere ist die Messeinheit dazu ausgebildet, die Messgröße über eine Betriebsdauer von mehreren Tagen, Wochen oder Monaten und/oder mit einer einstellbaren Abtastrate zu erfassen und an die Analyseeinheit auszugeben. Die Abtastrate kann beispielsweise 1 Hz betragen, jedoch auch oberhalb davon liegen und in Abhängigkeit der zu erfassenden Messgröße gewählt sein, etwa um eine Unterabtastung der zu erfassenden Messgröße zu vermeiden. Im Rahmen der Erfindung kann die Messeinheit einen oder mehrere Sensoren aufweisen, mittels derer zumindest ein Zustand oder eine Zustandsveränderung im Betrieb des Wandlerelementes messtechnisch erfasst werden können. Es ist denkbar, dass der Sensor hierbei mit zumindest einer elektrischen Steuerungseinheit verbunden ist, mittels derer der Sensor gesteuert und mit Energie versorgt wird. Insbesondere ist es mittels des Ultraschall-Wandlersystems möglich, einen zeitlichen Verlauf der Messgröße zu ermitteln. Insbesondere ist eine Prozess-Überwachung der Anlage möglich, in welcher das Ultraschall-Wandlersystem eingesetzt ist.

Bevorzugt umfasst das Ultraschall-Wandlersystem eine Mehrzahl von Wandlerelementen, die mechanisch und/oder elektrisch miteinander gekoppelt sind. Eine mechanische Kopplung kann beispielswiese mittels einer gemeinsamen Membran oder in einem Tauchschwinger erfolgen. Eine elektrische Kopplung kann vorgesehen sein, indem die Mehrzahl von Wandlerelementen mit einem einzigen Generator verbunden sind. Es liegt im Rahmen der Erfindung, dass der Mehrzahl von Wandlerelementen eine entsprechende Mehrzahl von Messeinheiten zugeordnet ist, wobei jeweils ein Wandlerelement mittels der ihm zugeordneten Messeinheit überwachbar ist. Alternativ kann vorgesehen sein, dass für zumindest zwei Wandlerelemente eine gemeinsame Messeinheit vorgesehen ist. Ebenso ist denkbar, dass einem Wandlerelement mehrere Messeinheiten zugeordnet sind, welche dazu dienen, das Wandlerelement messtechnisch zu überwachen.

Die Analyseeinheit bildet im Rahmen der Erfindung einen Teil des Ultraschall-Wandlersystems, und dient dazu, gesammelte Daten oder Informationen zu verarbeiten, damit aus den erfassten Messdaten ein Rückschluss auf einen Zustand des Wandlerelementes oder seine Änderung im Betrieb des Wandlerelementes gezogen werden kann. Es ist beispielsweise möglich, komplexe Datenmengen zu interpretieren, Muster zu erkennen, Trends zu identifizieren oder andere relevante Informationen zu extrahieren.

Insbesondere ist das erfindungsgemäße Ultraschall-Wandlersystem dafür vorgesehen und geeignet, in einer Ultraschall-Reinigungsanlage oder in einer Ultraschall-Prozessanlage eingesetzt zu werden.

In einer Ultraschall-Reinigungsanlage kann das Wandlerelement gemeinsam mit einem zu reinigenden Werkstück in ein Reinigungsmedium getaucht werden. Für den gewünschten Reinigungsprozess erzeugt das Wandlerelement Ultraschallwellen, welche zur Bildung von Kavitationsblasen im Reinigungsmedium führen. Diese Kavitationsblasen implodieren in der Nähe der Werkstückoberfläche, wodurch zu entfernende Schmutzpartikel und Verunreinigungen gelöst werden. In der Ultraschall-Reinigungsanlage können vorzugsweise mehrere Wandlerelemente eingesetzt werden, die räumlich derart verteilt sind, um eine gleichmäßige Schallausbreitung in dem Reinigungsmedium zu ermöglichen. Eine Überwachung der Ultraschall-Wandlerelemente ist vorteilhaft, da hierdurch sichergestellt werden kann, dass keines der Wandlerelemente in unbemerkter Weise ausgefallen ist oder künftig ausfällt. Insbesondere kann durch Überwachung der Wandlerelemente auf eine Prozesskenngröße der Ultraschall-Reinigungsanlage geschlossen werden, insbesondere auf einen Reinigungsparameter.

In einer Ultraschall-Prozessanlage kann das Wandlerelement gemeinsam mit einem in das zu prozessierende flüssige Medium getaucht werden. Für den gewünschten Prozess erzeugt das Wandlerelement Ultraschallwellen, welche zur Bildung von Kavitationsblasen im Prozessmedium führen. Diese Kavitationsblasen implodieren im Medium, wodurch die gewünschten mechanischen Effekte, wie beispielsweise Emulgierung, Dispergierung oder sonochemische Reaktionen oder weitere für den Prozess vorteilhafte chemisch-physikalische Effekte hervorgerufen werden. In der Ultraschall-Prozessanlage können vorzugsweise mehrere Wandlerelemente eingesetzt werden, die räumlich derart verteilt sind, um eine gleichmäßige Schallausbreitung im Prozessmedium zu ermöglichen. Eine Überwachung der Ultraschall-Wandlerelemente ist vorteilhaft, da hierdurch sichergestellt werden kann, dass keines der Wandlerelemente in unbemerkter Weise ausgefallen ist oder künftig ausfällt. Insbesondere kann durch Überwachung der Wandlerelemente auf eine Prozesskenngröße der Ultraschall-Prozessanlage geschlossen werden, insbesondere auf einen Prozessparameter.

Vorzugsweise sind zumindest die Messeinheit und die Analyseeinheit an einem bestehenden Ultraschall-Wandlersystem, welches einen Generator und ein Wandlerelement aufweist, nachrüstbar.

In einer vorteilhaften Weiterbildung umfasst die Messeinheit zumindest einen elektrischen Sensor, welcher dazu vorgesehen ist, eine elektrische Messgröße am Wandlerelement, insbesondere eine elektrische Spannung und/oder einen elektrischen Strom und/oder eine davon abhängige Kenngröße zu erfassen.

In einer denkbaren Ausführungsform ist der elektrische Sensor als Stromsensor ausgeführt und im Bereich der elektrischen Anschlüsse des Wandlerelements elektrisch mit diesem kontaktiert, um die elektrische Stromstärke an dem Wandlerelement zu messen. Zusätzlich oder alternativ kann der Stromsensor auch galvanisch von den elektrischen Anschlüssen getrennt sein, um die Stromstärke berührungslos und anhand der durch den elektrischen Strom erzeugten magnetischen Flussdichte zu messen. Ebenfalls ist es denkbar, dass der elektrische Sensor als Spannungsmesser ausgebildet ist, um die an dem Wandlerelement anliegende Spannung zu messen.

Da das Wandlerelement eines Ultraschall-Wandlersystems, wie eingangs erwähnt, typischerweise mit einer hochfrequenten Wechselspannung betrieben wird, ist es insbesondere zur Berücksichtigung des Shannon-Nyquist-Abtasttheorems vorteilhaft, wenn die Abtastrate, mit welcher der elektrische Sensor betrieben ist, mindestens das Doppelte der höchsten Frequenzkomponente der erfassten Messgröße beträgt. In anderen Worten ist es vorteilhaft, wenn die Abtastfrequenz mindestens das Zweifache der höchsten Frequenz des Wechselspannungssignals beträgt. Dies ist insbesondere dann zweckdienlich, wenn mittels des elektrischen Sensors eine Phasenlage einer an dem Wandlerelement anliegenden Wechselspannung ermittelt werden soll.

Es liegt im Rahmen der vorteilhaften Weiterbildung, dass mehrere elektrische Sensoren zum Einsatz kommen, um sowohl die an dem Wandlerelement anliegende elektrische Spannung sowie die Stromstärke zu messen. Dies ist insbesondere dann denkbar, wenn diese elektrischen Messgrößen dazu genutzt werden sollen, um eine aus Stromstärke und Spannung abgeleitete Kenngröße zu erfassen, zum Beispiel die Leistung, Blindleistung oder eine andere, davon abhängige Größe.

Die Analyseeinheit kann ferner dazu eingerichtet sein, die elektrische Messgröße oder deren zeitlichen Verlauf mittels einer auf der Analyseeinheit gespeicherten Auswerteroutine zu analysieren. Vorzugsweise ist die Analyseeinheit mittels der darauf gespeicherten Auswerteroutine dazu ausgestaltet, einen Zustand oder eine Zustandsänderung im Betrieb des Wandlerelementes in Abhängigkeit der elektrischen Messgröße auszugeben.

In einer vorteilhaften Weiterbildung umfasst die Messeinheit zumindest einen mechanischen Sensor, welcher dazu vorgesehen ist, eine mechanische Messgröße des Wandlerelementes zu erfassen, insbesondere eine Position, eine Dehnung und/oder eine Beschleunigung.

Untersuchungen der Anmelderin haben gezeigt, dass unerwünschte Abweichungen im Betrieb eines Wandlerelementes nicht nur durch Erfassung elektrischer Messgrößen zuverlässig festgestellt werden, sondern ebenso durch Erfassung von mechanischen Messgrößen, von denen auf die Lage, Verformung oder Bewegung des Wandlerelementes während seines Betriebs geschlossen werden kann.

Der mechanische Sensor ist im Rahmen der vorteilhaften Weiterbildung nicht auf ein bestimmtes Wirkprinzip beschränkt. Vielmehr ist es allein relevant, dass dieser in der Lage ist, eine der oben genannten mechanischen Kenngrößen zu erfassen. Der mechanische Sensor kann dazu ausgebildet sein, die mechanische Kenngröße berührend, also mittels eines mechanischen Kontaktes mit dem Wandlerelement und/oder berührungslos, also ohne mechanischen Kontakt mit dem Wandlerelement, zu erfassen. Es liegt ferner im Rahmen der vorteilhaften Weiterbildung, dass die mechanische Messgröße des Wandlerelementes, insbesondere die Position, die Dehnung und/oder die Beschleunigung direkt oder indirekt erfasst werden. Eine indirekte Erfassung der mechanischen Größen kann insbesondere dadurch erfolgen, dass eine direkt ermittelte Größe mittels einer Differentialoperation und/oder einer Integraloperation in die indirekt ermittelte Größe umgewandelt wird. Es liegt also im Rahmen der vorteilhaften Weiterbildung, dass nicht nur eine Position, Geschwindigkeit, Dehnung oder Beschleunigung mittels des mechanischen Sensors erfassbar sind, sondern auch deren jeweilige Veränderungen.

So kann es sich bei dem mechanischen Sensor zum Beispiel um einen Wegmesssensor handeln, mittels dessen eine Position des Wandler-Elementes direkt erfasst werden kann. Unter Durchführung der oben genannten Differentialoperation zwischen zwei gemessenen Positionen kann auf eine Dehnung und/oder Geschwindigkeit des Wandler-Elementes geschlossen werden. Eine weitere Durchführung einer Differentialoperation ermöglich die Bestimmung der Beschleunigung des Wandler-Elementes.

Zusätzlich oder alternativ kann ein Geschwindigkeitssensor und/oder ein Beschleunigungssensor vorgesehen sein, welcher dazu ausgebildet ist, eine Geschwindigkeit bzw. Beschleunigung des Wandler-Elementes zu erfassen. Insbesondere kann der Sensor als mikroelektromechanisches System (MEMS) ausgebildet sein. Zusätzlich oder alternativ kann der mechanische Sensor eine Anordnung aus Dehnmessstreifen umfassen, mittels derer eine Dehnung des Wandlerelementes festgestellt werden kann. Ebenso ist es denkbar, dass der mechanische Sensor als Laservibrometer ausgestaltet ist, um eine Auslenkungsgeschwindigkeit des Wandlerelementes festzustellen.

In einer vorteilhaften Weiterbildung umfasst die Messeinheit einen Umgebungssensor, welcher dazu vorgesehen ist, eine atmosphärische Messgröße in der Umgebung des Wandlerelementes zu erfassen, insbesondere eine Umgebungstemperatur und/oder einen Umgebungsfeuchtigkeit und/oder einen Umgebungsdruck.

Wie Untersuchungen der Anmelderin gezeigt haben, kann die Einsatzumgebung eines Ultraschall-Wandlersystems erhebliche Auswirkungen auf seine Zuverlässigkeit im Betrieb haben. Übermäßig hohe oder niedrige Temperaturen sowie starke Temperaturschwankungen können insbesondere die Materialien des Wandlerelementes beeinträchtigen und zu vorzeitigem Verschleiß oder Ausfällen führen. Hohe Temperaturen können zum Beispiel die Elastizität von Gummi oder Kunststoffen an den Dichtungen des Wandlerelements verringern, während niedrige Temperaturen zu Brüchen oder Rissbildung führen können. Feuchte Umgebungen können Korrosion oder Oxidation verursachen, was die Lebensdauer der Wandlerelemente beeinträchtigen kann. Korrosion kann die Festigkeit von Metallkomponenten reduzieren und zu einem plötzlichen Ausfall führen. Der Luftdruck kann die Funktionstüchtigkeit von Dichtungen der Wandlerelemente beeinflussen.

Es liegt im Rahmen der Erfindung, dass der Umgebungssensor derart ausgebildet ist, dass eine Mehrzahl von Messaufnehmern zu einem Sensormodul zusammengefasst sind, mittels dessen die Umgebungstemperatur und/oder die Umgebungsfeuchtigkeit und/oder den Umgebungsdruck einzeln oder gemeinsam messbar sind. Insbesondere kann ein derartiger Umgebungssensor als mikroelektromechanisches System (MEMS) ausgebildet sein, mittels dessen zumindest eine der atmosphärischen Messgrößen ermittelt werden kann. Insbesondere kann der Umgebungssensor zu dem Wandlerelement beabstandet angeordnet sein, bevorzugt jedoch in einem gemeinsamen Gehäuse.

In einer vorteilhaften Weiterbildung ist die Analyseeinheit dazu eingerichtet, eine Änderung im Betrieb des Wandlerelementes in Abhängigkeit der ausgewerteten Messdaten zu erkennen und/oder vorherzusagen.

Durch die Analyse der Messdaten kann die Analyseeinheit frühzeitig potenzielle Probleme oder Abweichungen im Betrieb des Wandlerelements erkennen, was insbesondere mittels einer Prozess-Überwachung möglich ist. Eine Prozess-Überwachung kann als fortlaufende Beobachtung und Analyse des Betriebs des Ultraschall-Wandlersystems angesehen werden. Da der Betrieb des Ultraschall-Wandlersystems häufig einen unmittelbaren Einfluss auf die Prozessführung der Anwendung hat, in der das Ultraschall-Wandlersystem eingesetzt ist, kann damit sichergestellt werden, dass mit der besagten Anwendung die gewünschten Ergebnisse erzielt werden und dabei insbesondere Standards, Vorgaben oder Qualitätsnormen eingehalten werden. Dadurch können auch unnötige Stillstandzeiten des Ultraschall-Wandlersystems vermieden und die Effizienz des Betriebs verbessert werden. Ein weiterer Vorteil liegt in der Möglichkeit einer frühzeitigen Fehlererkennung. Die Analyseeinheit ermöglicht es, Abweichungen im Betrieb des Wandlerelements bereits in einem frühen Stadium zu identifizieren. Dadurch können potenzielle Störungen oder Defekte erkannt werden, bevor sie sich zu schwerwiegenderen Problemen entwickeln. Dies trägt dazu bei, teure Reparaturen oder unvorhergesehene Ausfälle zu vermeiden und die Gesamtlebensdauer des Wandlerelements und des Ultraschall-Wandlersystems zu verlängern. Darüber hinaus eröffnet die vorteilhafte Weiterbildung die Möglichkeit der präventiven Instandhaltung. Dank der Analyseergebnisse können Wartungsarbeiten geplant und durchgeführt werden, bevor es zu ungeplanten Ausfallzeiten kommt. Dadurch wird die Verfügbarkeit des Wandlerelements verbessert und die Betriebskosten können gesenkt werden. Ein weiterer Vorteil besteht darin, dass die Analyseeinheit auch in der Lage ist, das Verhalten des Wandlerelements auf Basis der Messdaten vorherzusagen. Diese Fähigkeit ermöglicht es, proaktiv Betriebsparameter zu optimieren und das Wandlerelement besser an die aktuellen Anforderungen und Lastbedingungen anzupassen.

Die Analyseeinheit kann eine oder mehrere Komponenten aufweisen. Insbesondere kann die Analyseeinheit dazu ausgebildet sein, die erfassten Messgrößen vorzuverarbeiten und die vorverarbeiteten Messgrößen hinsichtlich des Betriebszustandes des Wandlerelements auszuwerten. Vorzugsweise kann die Analyseeinheit hierfür ein Vorverarbeitungsmodul und ein Auswertemodul aufweisen, welche signaltechnisch miteinander verbunden sind.

Eine Vorverarbeitung der Messgröße, insbesondere mittels des Vorverarbeitungsmoduls, kann auf unterschiedliche Weisen erfolgen und beispielsweise eine Analog-Digital-Wandlung, eine Digital-Analog-Wandlung, eine Filterung, eine Differenz-, Quotienten- oder Mittelwertbildung, eine Transformation, insbesondere eine Fourier-Transformation, eine Datenkompression, eine Messwertglättung oder Interpolation oder etwa eine Signalverstärkung umfassen. Das Vorverarbeitungsmodul kann in Gestalt eines elektrischen Controllers, insbesondere eines Microcontrollers ausgebildet sein. Ein Vorverarbeitungsmodul kann signaltechnisch mit nur einem oder mehreren Messeinheiten signaltechnisch verbunden sein.

Bei der Analog-Digital-Wandlung (ADC) werden analoge Eingangssignale in digitale Werte umgewandelt. Dies ermöglicht es der elektrischen Steuereinheit, mit den Daten in digitaler Form zu arbeiten und sie zu speichern, zu analysieren oder über digitale Schnittstellen zu übertragen.

Umgekehrt kann der Microcontroller auch eine Digital-Analog-Wandlung (DAC) durchführen. Hierbei werden digitale Werte in analoge Signale umgewandelt, um beispielsweise analoge Ausgangssignale zu erzeugen.

Mittels Filterung kann unerwünschtes Rauschen reduziert oder bestimmte Frequenzbereiche isoliert werden. Es stehen verschiedene digitale Filtertypen wie Tiefpass-, Hochpass-, Bandpass- und Notch-Filter zur Verfügung.

Mittels Mittelwertbildung, Quotientenbildung oder Differenzbildung können aus den Messgrößen einfacher zu interpretierende Kenngrößen berechnet werden.

Die Fourier-Transformation, insbesondere die schnelle Fourier-Transformation (FFT), ermöglicht es der elektrischen Steuereinheit, Signale aus dem Zeitbereich in den Frequenzbereich zu transformieren. Dadurch können spezifische Frequenzkomponenten identifiziert und eine Spektralanalyse durchgeführt werden.

In Anwendungen mit begrenztem Speicher kann mittels Datenkompression eine vorliegende Datenmenge reduziert werden und Informationen effizienter gespeichert und übertragen werden.

Signalglättung und Interpolation stellen Maßnahmen dar, um unregelmäßige oder verrauschte Signalverläufe zu glätten und fehlende Datenpunkte zu ergänzen. Eine Verstärkung der Messsignale kann erfolgen, um optimale Verarbeitungsergebnisse zu erzielen.

Eine weitere Verarbeitung der vorverarbeiteten Messgröße, insbesondere mittels des Auswertemoduls, kann mittels einer Recheneinheit und einer darauf eingerichteten Auswerteroutine erfolgen. Die Auswerteroutine kann auf Basis einer statistischen Methode, maschinellem Lernen und/oder künstlicher Intelligenz implementiert sein. Damit ist es möglich, in Abhängigkeit der erfassten Messgröße einen Rückschluss auf einen Zustand des Wandlerelements zu ziehen, insbesondere ob dieser sich in einem nominellen Betriebszustand oder einem gestörten Betriebszustand befindet oder ob ein solcher bevorsteht. In einem einfachen Ausführungsbeispiel kann die Analyseeinheit dazu eingerichtet sein, die gemessene Messgröße oder den zeitlichen Verlauf der Messgröße mit einem oder mehreren zuvor festgelegten Grenzwerten abzugleichen und in Abhängigkeit davon ein Signal auszugeben, welches anzeigt, ob die Messgröße oder deren Verlauf sich innerhalb eines tolerierbaren Bereiches befindet oder nicht.

Es liegt auch im Rahmen der Erfindung, dass keinerlei Vorverarbeitung des Messsignals erfolgen muss, damit dieses ausgewertet werden kann oder dass die Vorverarbeitung und Auswertung in einer zusammenhängenden Auswerteroutine in der Analyseeinheit erfolgen.

In einer vorteilhaften Weiterbildung umfasst das Ultraschall-Wandlersystem eine Mehrzahl von Wandlerelementen, welche jeweils energietechnisch mit dem Generator verbunden sind sowie eine Mehrzahl an Messeinheiten, wobei jeweils eine der Messeinheiten einem der Wandlerelemente zugeordnet und dazu ausgebildet ist, das jeweilige Wandlerelement messtechnisch zu überwachen.

Zwar ist es für eine Vielzahl von Anwendungen ausreichend, ein Ultraschall-Wandlersystemen mit lediglich einem Wandlerelement bereitzustellen, welches die gewünschte mechanische Schwingung erzeugt. Allerdings kann die Geometrie oder die Abmessungen eines oder mehrerer Körper, die beispielsweise mittels Ultraschall gereinigt oder anderweitig verarbeitet werden sollen, den Einsatz mehrerer Wandlerelemente erfordern. Wenn die Wandlerelemente gleichzeitig im Betrieb sind ist es nicht immer möglich festzustellen, ob und welchem der Wandlerelemente ein Ausfall oder eine Betriebsstörung bevorstehen oder bereits eingetreten sind. Aus diesem Grund ist es vorteilhaft, die Wandlerelemente jeweils mit einer oder mehreren Messeinheiten auszustatten, um sie messtechnisch überwachen zu können.

In einer vorteilhaften Weiterbildung ist die Analyseeinheit, insbesondere das Vorverarbeitungsmodul, zumindest teilweise in die Messeinheit, insbesondere den Sensor, integriert. Hierfür können die Analyseeinheit, bevorzugt ein Vorverarbeitungsmodul der Analyseeinheit, und die Messeinheit, insbesondere ein Sensor der Messeinheit, in ein gemeinsames System, insbesondere ein eingebettetes (auch: embedded) System, integriert sein. Das Vorverarbeitungsmodul kann hierbei, wie oben schon angedeutet, als Microcontroller ausgebildet sein. Insbesondere kann die Messeinheit und das Vorverarbeitungsmodul dabei in ein gemeinsames Gehäuse integriert sein, welches in der Umgebung des Wandlerelements angeordnet werden kann. Das Vorverarbeitungsmodul kann dabei standardisierte Schnittstellen aufweisen, mittels derer ausgewertete Messdaten an das Auswertemodul ausgegeben werden können.

In einer vorteilhaften Weiterbildung ist die Analyseeinheit, insbesondere das Auswertemodul, zumindest teilweise in den Generator integriert. Hierbei können die Analyseeinheit, insbesondere die Auswerteeinheit und der Generator räumlich gebündelt, insbesondere in einem gemeinsamen Gehäuse vorliegen und dabei vorzugsweise signaltechnisch miteinander verbunden sein. Eine räumliche Bündelung der Analyseeinheit und des Generators ist vorteilhaft, da die Messeinheit in platzsparender Weise an dem Wandlerelement oder in seiner Umgebung angeordnet werden kann und die Auswertung der erhobenen Messdaten räumlich getrennt von dem Wandlerelement erfolgen kann. Die signaltechnische Verbindung zwischen der Analyseeinheit und dem Generator ermöglicht es, die mittels der Messeinheit erhobenen Messdaten auszuwerten und für eine Regelung des Generators zu nutzen. Insbesondere ist es möglich, den Betrieb des Wandlerelementes mittels des Generators in Abhängigkeit der Messgrößen am Wandlerelement zu steuern oder zu regeln.

In einer vorteilhaften Weiterbildung ist die Analyseeinheit, insbesondere das Vorverarbeitungsmodul und/oder das Auswertemodul, zumindest teilweise in einen Auswerterechner integriert. Ein Auswerterechner kann im Rahmen der vorteilhaften Weiterbildung als ein Industrie-PC ausgestaltet sein, mittels dessen die Messeinheit betrieben wird und mittels dessen die erhobenen Messdaten ausgewertet werden können. Ein Vorteil des Auswerterechners besteht darin, dass dieser auch zur Steuerung einer Anlage, insbesondere einer Ultraschall-Reinigungsanlage und/oder einer Prozessanlage vorgesehen sein kann, in der das Ultraschall-Wandlersystem verwendet wird. Darüber hinaus besteht ein Vorteil darin, dass die Messeinheit in platzsparender Weise an dem Wandlerelement oder in seiner Umgebung angeordnet werden kann und die Auswertung der erhebbaren Messdaten, wie oben erläutert, räumlich getrennt von dem Wandlerelement erfolgen kann.

In einer vorteilhaften Weiterbildung sind zumindest die Messeinheit und die Analyseeinheit an ein Bus-System angebunden und über das Bus-System signaltechnisch miteinander verbunden.

Ein Vorteil in der Anbindung der Messeinheit und der Analyseeinheit an ein Bus-System besteht darin, dass das Bus-System eine einfache Übermittlung von Daten zwischen der Messeinheit und der Analyseeinheit ermöglicht. Die erfassten Messdaten können effizient und schnell zur Analyseeinheit übertragen werden, wo sie weiterverarbeitet und analysiert werden, um relevante Informationen zu gewinnen. Zudem verringert sich der Aufwand bei der signaltechnischen Verkabelung der Messeinrichtung erheblich, wobei insbesondere eine einzige Datenverbindung genutzt werden kann, um die signaltechnische Verbindung zwischen der Messeinheit und der Analyseeinheit bereitzustellen. Außerdem fördert der Einsatz eines Bus-Systems die Erweiterbarkeit des Ultraschall-Wandlersystems für zusätzliche Komponenten, insbesondere durch weitere Messeinheiten und Analyseeinheiten.

Die vorteilhafte Weiterbildung ist nicht auf ein bestimmtes Bus-System beschränkt. Vielmehr liegt es im Rahmen der vorteilhaften Weiterbildung, dass das Bus-System ein oder mehrere unterschiedliche Arten von Bus-Teilsystemen aufweist. Insbesondere kann das Bus-System zumindest teilweise entsprechend einem der nachfolgend genannten Systeme ausgebildet sein: Universal Serial Bus (USB), Controller Area Network (CAN), Ethernet, Profibus, Modbus, Inter-Integrated Circuit (I2C), Serial Peripheral Interface (SPI).

In einer vorteilhaften Weiterbildung umfasst das Bus-System eine zentrale Steuereinheit, insbesondere eine speicherprogrammierbare Steuereinheit, welche signaltechnisch mit dem Generator verbunden ist. Zudem ist es vorteilhaft, wenn die zentrale Steuereinheit mit der Auswerteeinheit signaltechnisch verbunden ist. Die zentrale Steuereinheit kann hierbei dazu dienen, den Generator anzusteuern. Insbesondere kann dies in Abhängigkeit der ausgewerteten Messsignale erfolgen. Dadurch lässt sich ein Regelkreis ausbilden, mit dem das Wandlerelement betrieben wird.

Wie oben erwähnt, wird die Aufgabe auch gelöst mittels eines Verfahrens gemäß Anspruch 17.

Das erfindungsgemäße Verfahren umfasst die folgenden Verfahrensschritte:
A) Bereitstellen eines erfindungsgemäßen Ultraschall-Wandlersystems oder einer vorteilhaften Weiterbildung davon;
B) Messtechnisches Überwachen eines Wandlerelementes oder mehrerer Wandlerelemente mittels der Messeinheit und Erzeugen von Messdaten;
C) Übermitteln der Messdaten von der Messeinheit an die Analyseeinheit;
D) Auswerten der Messdaten mittels der Analyseeinheit.

Vorzugsweise umfasst das Verfahren auch den folgenden Verfahrensschritt:
E) Erkennen und/oder Vorhersagen einer Veränderung eines Zustandes des Wandlerelementes in Abhängigkeit der ausgewerteten Messdaten.

Insbesondere wird in Verfahrensschritt A) das Ultraschwall-Wandlersystem oder eine vorteilhafte Weiterbildung davon in einer Ultraschall-Reinigungsanlage oder einer Ultraschall-Prozessanlage bereitgestellt. In einem Verfahrensschritt F) wird in Abhängigkeit der ausgewerteten Messdaten eine Prozesskenngröße der Ultraschall-Reinigungsanlage oder einer Ultraschall-Prozessanlage.

Gemäß der vorstehend beschriebenen Weiterbildung ist es also auf indirekte Weise möglich, mittels einer Überwachung des Ultraschall-Wandlersystems einen Rückschluss auf eine oder mehrere Prozesskenngrößen einer Ultraschall-Reinigungsanlage oder einer Ultraschall-Prozessanlage zu ziehen. Insbesondere kann die Prozesskenngröße einen Zustand oder eine Zustandsänderung der jeweiligen Anlage oder eines darin bearbeiteten oder behandelten Werkstückes oder Prozessmediums angeben. Insbesondere ist ein Qualitätsparameter des Werkstückes oder Mediums abhängig von der Prozesskenngröße. Vorzugsweise wird in Abhängigkeit der Prozesskenngröße der Qualitätsparameter des Werkstückes oder des Mediums ermittelt.

Insbesondere ist das erfindungsgemäße Verfahren oder eine vorteilhafte Weiterbildung davon geeignet, um mit dem erfindungsgemäßen Ultraschall-Wandlersystem oder einer vorteilhaften Weiterbildung davon durchgeführt zu werden. Insofern gelten die Ausführungen zu den technischen Merkmalen des Ultraschall-Wandlersystems und den damit erreichbaren Vorteilen entsprechend.

Beispielhafte Ausführungsformen der erfindungsgemäßen Gegenstände sind nachfolgend anhand der Figuren erläutert. Es zeigen
- Figur 1: ein erstes Ultraschall-Wandlersystem;
- Figur 2: ein zweites Ultraschall-Wandlersystem.

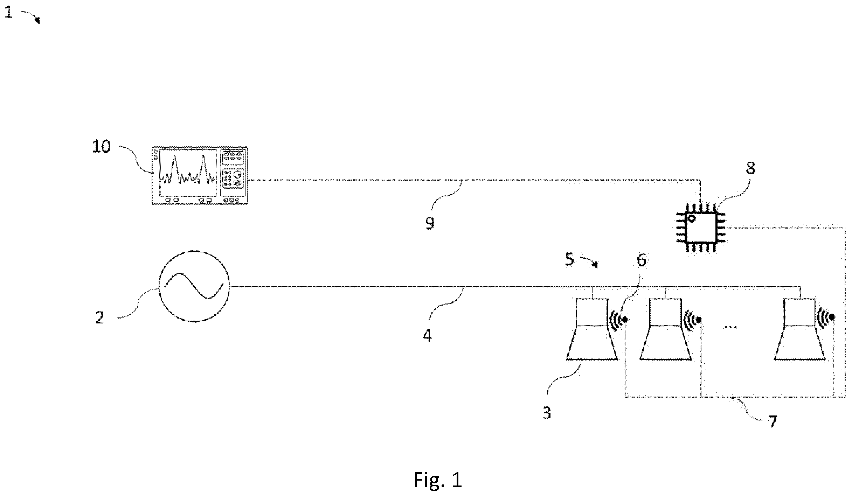

Figur 1 zeigt ein erstes Ultraschall-Wandlersystem 1, welches in hier nicht näher gezeigter Weise als Bestandteil einer Ultraschall-Reinigungsanlage ausgebildet ist.

Das in Figur 1 gezeigte Ultraschall-Wandlersystem 1 umfasst einen Generator 2 der dazu ausgebildet ist, eine Wechselspannung mit einer Frequenz im Bereich von 18 kHz zu generieren. Ferner weist das Ultraschall-Wandlersystem 1 eine Vielzahl an Wandlerelementen 3 auf, von denen in Figur 1 zur besseren Übersichtlichkeit nur eines mit Bezugszeichen versehen ist. Die Wandlerelemente 3 umfassen jeweils eine piezoelektrische Komponente, die sich bei Anlegen einer elektrischen Spannung verformt, wobei der sog. "piezoelektrische Effekt" ausgenutzt wird. Durch Anlegen der Wechselspannung des Generators 2 über die elektrische Verbindung 4 werden die Wandlerelemente 3 zu einer mechanischen Schwingung angeregt. Diese Schwingung führt bei hinreichend großer Schwingungsamplitude in einer Reinigungsflüssigkeit zur Ausbildung von akustischer Kavitation. Die dabei erzeugten Gas- oder Dampfbläschen kollabieren zumindest teilweise dabei abrupt an einer zu reinigenden Oberfläche und lösen dadurch zu entfernende Partikel oder filmische Verunreinigungen.

Eine Herausforderung im Betrieb von Ultraschall-Wandlersystemen in Ultraschall-Reinigungsanlagen oder anderen industriellen Anwendungen besteht darin, dass Wandlerelemente 3 rauen Umgebungsbedingungen ausgesetzt sein können. Hierdurch entstehen störende Einflüsse auf die Wandlerelemente 1, die insbesondere bei langen Betriebszeiten zu unerwünschten Abweichungen bei den erzeugten mechanischen Schwingungen oder Ausfällen des gesamten Ultraschall-Wandlersystems 1 führen können. Dies äußert sich beispielsweise in einer mangelnden Konsistenz hinsichtlich der Amplitude oder Frequenz der erzeugten mechanischen Schwingung.

Um eine unerwünschte Abweichung im Betrieb der Schwingungselemente 3 zu erfassen, weist das in Figur 1 gezeigte Ultraschall-Wandlersystem 1 eine Mehrzahl an Messeinheiten 5 auf, wobei jedem der Wandlerelemente 3 jeweils eine Messeinheit 5 zugeordnet ist, die das ihr zugeordnete Wandlerelement 3 messtechnisch überwacht. Für eine bessere Übersichtlichkeit ist nur eine der Messeinheiten 5 mit einem Bezugszeichen versehen. Die Messeinheiten 5 sind in nicht näher gezeigter Weise als Messboxen ausgebildet, die jeweils den elektrischen Anschlüssen der Wandlerelemente 3 vorgeschaltet sind.

Die Messeinheiten 5 umfassen jeweils einen Sensor 6. In dem in Figur 1 gezeigten Ausführungsbeispiel handelt es sich jeweils um einen elektrischen Sensor zur Überwachung einer elektrischen Spannung, welche an den elektrischen Anschlüssen der Wandlerelemente 3 anliegt. Alternativ kann der Sensor auch als mechanischer Sensor ausgebildet sein, mittels dessen eine mechanische Messgröße erfasst werden kann, etwa eine Lage der Wandlerelemente in einem Gehäuse, die Veränderung dieser Lage sowie eine Dehnung oder Beschleunigung. Ebenso ist es denkbar, dass die Sensoren 6 jeweils Umweltsensoren sind, die dazu dienen, eine atmosphärische Messgröße in der Umgebung der Wandlerelemente 3 zu erfassen, zum Beispiel eine Umgebungstemperatur, eine Luftfeuchte oder einen Luftdruck.

Mittels der Sensoren 6 ist es möglich, eine dauerhafte Überwachung der Wandlerelemente 3 sicherzustellen, wobei die Sensoren 6 in Überwachungsperioden von Tagen bis hin zu Wochen dauerhaft betrieben werden können. Die Abtastraten können grundsätzlich variieren und von der zu erfassenden Messgröße abhängig sein. In dem in Figur 1 gezeigten Ausführungsbeispiel ist die Abtastrate doppelt so hoch, wie die Frequenz der Spannung, die an den Anschlüssen der Wandlerelemente 3 anliegt.

Die Sensoren 6 sind mit einem gemeinsamen Vorverarbeitungsmodul 8 in Gestalt eines Mikrocontrollers über eine gemeinsame Bus-Verbindung 7 signaltechnisch verbunden. Die mittels der Sensoren 6 erfassten Messgrößen werden über die Bus-Verbindung and das Vorverarbeitungsmodul 8 gegeben und in diesem vorverarbeitet. Die Vorverarbeitung umfasst im vorliegenden Fall eine Filterung der erfassten elektrischen Spannung.

Über eine weitere Bus-Verbindung 9 ist das Vorverarbeitungsmodul 8 mit einem Auswertemodul 10 verbunden, mittels derer die vorverarbeiteten Daten analysiert werden, um Auffälligkeiten im Betrieb der Wandlerelemente 3 feststellen zu können. Das Vorverarbeitungsmodul 8 und das Auswertemodul 10 können gemeinsam als Analyseeinheit angesehen werden.

Mittels des Auswertemoduls 10 ist es möglich, bereits aufgetretene sowie bevorstehende Störungen oder unerwünschte Abweichungen im Betrieb der Wandlerelemente 3 festzustellen. Eine Feststellung von bereits aufgetretenen Abweichungen kann erfolgen, indem die in die Analyseeinheit eingegebenen Daten mit vorab auf dem Auswertemodul 10 gespeicherten Grenzwerten abgeglichen wird. Bevorstehende Abweichungen können mittels des Auswertemoduls 10 mittels einer Analyse von statistischen Kenngrößen und Trends im zeitlichen Verlauf der Messgrößen ermittelt werden. Es liegt auch im Rahmen der hier gezeigten Ausführungsform, dass ein Verfahren auf Basis von künstlicher Intelligenz auf dem Auswertemodul 10 implementiert ist, mittels dessen bereits aufgetretene und/oder bevorstehende Abweichungen im Betrieb der Wandlerelemente 3 erkannt oder vorhergesagt werden können.

In hier nicht näher gezeigter Weise kann das Auswertemodul 10 in den Generator 2 integriert und signaltechnisch mit diesem verbunden sein. Dadurch ist es möglich, den Generator 2 in Abhängigkeit der ausgewerteten Messgrößen zu betreiben und damit auch den Betrieb der Wandlerelemente 3 zu regeln. Ebenso ist es möglich, dass das Vorverarbeitungsmodul 8 und das Auswertemodul 10 zu einer gemeinsamen Funktionseinheit integriert sind und die Analyseeinheit bilden.

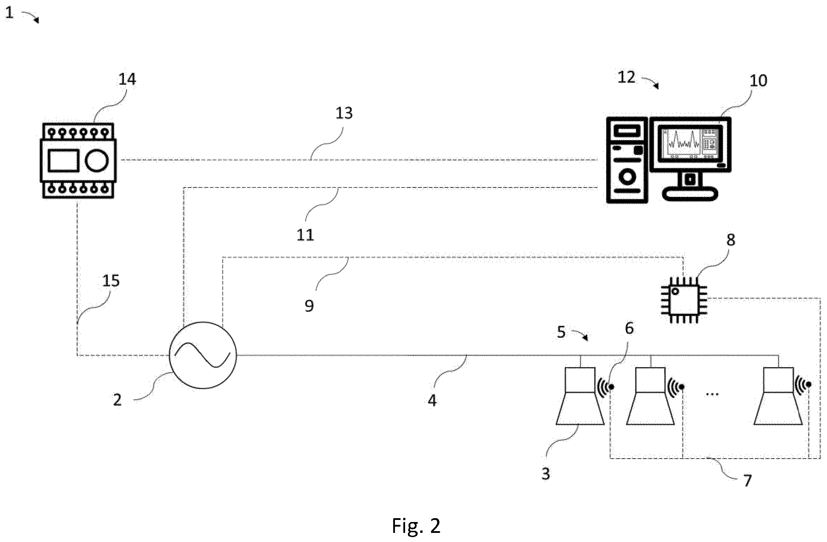

Figur 2 zeigt ein anderes Ultraschall-Wandlersystem 1, welches, entsprechend den Ausführungen zu Figur 1, einen Generator 2 umfasst, der energietechnisch mit einer Mehrzahl an Wandlerelementen 3 verbunden ist und diese mittels einer hochfrequenten Wechselspannung zu einer mechanischen Schwingung anregt. Wie ebenfalls in Bezug auf Figur 1 bereits erläutert, ist eine Mehrzahl an Messeinheiten 5 vorgesehen, mittels derer die Wandlerelemente 3 individuell überwacht werden und die von den Sensoren 6 erfassten Messdaten über eine Bus-Verbindung 7 in das Vorverarbeitungsmodul 8 eingegeben werden.

Im Unterschied zu der in Figur 1 gezeigten Ausführungsform ist das Vorverarbeitungsmodul 8 über die Bus-Verbindung 9 nicht unmittelbar mit dem Auswertemodul 10, sondern mit dem Generator 2 verbunden, welcher wiederum über die Bus-Verbindung 11 mit einem Auswerterechner 12 verbunden ist, in dem das Auswertemodul 10 integriert ist. In anderen Worten sind die Messeinheiten 5, der Generator 2 und das Auswertemodul 10 in einem gemeinsamen Bus-System angeordnet, mittels dessen sie signaltechnisch miteinander kommunizieren. Der Auswerterechner 12 ist über die Bus-Verbindung 13 mit einer zentralen Steuereinheit 14 verbunden. Diese dient dazu, den Generator 2 über die Bus-Verbindung 15 zu steuern.

## Patentansprüche

1. Ultraschall-Wandlersystem (1) mit
mindestens einem Generator (2), mindestens einem Wandlerelement (3), mindestens einer Messeinheit (5) und mindestens einer Analyseeinheit (8, 10),
wobei der Generator (2) und das Wandlerelement (3) energietechnisch miteinander verbunden sind und der Generator (2) dazu ausgebildet ist, elektrische Energie für das Wandlerelement (3) bereitzustellen und das Wandlerelement (3) dazu ausgebildet ist, die mittels des Generators (2) bereitgestellte elektrische Energie in eine mechanische Schwingung zu wandeln,
und wobei die Messeinheit (5) und die Analyseeinheit (8, 10) signaltechnisch miteinander verbunden sind und die Messeinheit (5) dazu vorgesehen ist, das Wandlerelement (3) messtechnisch zu überwachen und Messdaten an die Analyseeinheit (8, 10) zu übermitteln und die Analyseeinheit (8, 10) dazu eingerichtet ist, die von der Messeinheit (5) bereitgestellten Messdaten auszuwerten.

2. Ultraschall-Wandlersystem (1) nach Anspruch 1, mit
einer Mehrzahl von Wandlerelementen, welche mechanisch und/oder elektrisch miteinander gekoppelt sind sowie mit einer Mehrzahl von Messeinheiten, welche dazu ausgebildet sind, die Wandlerelemente messtechnisch zu überwachen.

3. Ultraschall-Wandlersystem (1) nach Anspruch 2, bei dem
die Messeinheit (5) zumindest einen elektrischen Sensor (5) umfasst, welcher dazu vorgesehen ist, eine elektrische Messgröße am Wandlerelement (3), insbesondere eine elektrische Spannung und/oder eine elektrische Stromstärke und/oder eine davon abhängige Kenngröße zu erfassen.

4. Ultraschall-Wandlersystem (1) nach Anspruch 1 bis 3, bei dem
die Messeinheit (5) zumindest einen mechanischen Sensor (5) umfasst, welcher dazu vorgesehen ist, eine mechanische Messgröße des Wandlerelementes zu erfassen, insbesondere eine Position und/oder eine Dehnung und/oder eine Beschleunigung.

5. Ultraschall-Wandlersystem (1) nach einem der voranstehenden Ansprüche, bei
dem die Messeinheit (5) zumindest einen Umgebungssensor (6) umfasst, welcher dazu vorgesehen ist, eine atmosphärische Messgröße in der Umgebung des Wandlerelementes zu erfassen, insbesondere eine Umgebungstemperatur und/oder einen Umgebungsfeuchtigkeit und/oder einen Umgebungsdruck.

6. Ultraschall-Wandlersystem (1) nach einem der voranstehenden Ansprüche, bei dem die Messeinheit (5) in das Wandlerelement (6) integriert ist.

7. Ultraschall-Wandlersystem (1) nach einem der voranstehenden Ansprüche, bei dem die Analyseeinheit (8, 10) dazu eingerichtet ist, eine Betriebsstörung des Wandlerelementes (3) in Abhängigkeit der ausgewerteten Messdaten zu erkennen und/oder vorherzusagen.

8. Ultraschall-Wandlersystem (1) nach einem der voranstehenden Ansprüche, mit einer Mehrzahl von Wandlerelementen (3), welche jeweils energietechnisch mit dem Generator (3) verbunden sind und mit einer Mehrzahl an Messeinheiten (5), wobei jeweils eine der Messeinheiten (5) zumindest teilweise einem der Wandlerelemente zugeordnet und dazu ausgebildet ist, das jeweilige Wandlerelement messtechnisch zu überwachen.

9. Ultraschall-Wandlersystem (1) nach einem der voranstehenden Ansprüche, bei dem die Analyseeinheit ein Vorverarbeitungsmodul (8) und ein Auswertemodul (10) aufweist, welche signaltechnisch miteinander verbunden sind.

10. Ultraschall-Wandlersystem (1) nach einem der voranstehenden Ansprüche, bei dem die Analyseeinheit (8, 10) zumindest teilweise in die Messeinheit (5) integriert ist, wobei insbesondere das Vorverarbeitungsmodul (8) in die Messeinheit (5) integriert ist.

11. Ultraschall-Wandlersystem (1) nach einem der voranstehenden Ansprüche, bei dem die Analyseeinheit (8, 10) zumindest teilweise in den Generator (2) integriert ist, wobei insbesondere das Auswertemodul (10) in den Generator (2) integriert ist.

12. Ultraschall-Wandlersystem (1) nach einem der voranstehenden Ansprüche, bei dem die Analyseeinheit (8, 10) zumindest teilweise in einen Auswerterechner (12) integriert ist.

13. Ultraschall-Wandlersystem (1) nach einem der voranstehenden Ansprüche, bei dem zumindest die Messeinheit (5) und/oder die Analyseeinheit (8, 10) an ein Bus-System angebunden sind und über das Bus-System signaltechnisch miteinander verbunden sind.

14. Ultraschall-Wandlersystem (1) zumindest nach Anspruch 13, bei dem das Bus-System eine zentrale Steuereinheit (14), insbesondere eine speicherprogrammierbare Steuereinheit, umfasst, welche signaltechnisch mit dem Generator (2) verbunden ist.

15. Ultraschall-Wandlersystem (1) zumindest nach Anspruch 14, bei dem die zentrale Steuereinheit (14) mit der Auswerteeinheit (8, 10) signaltechnisch verbunden ist.

16. Ultraschall-Wandlersystem (1) nach Anspruch 15, bei dem die zentrale Steuereinheit (14) dazu eingerichtet ist, den Generator (2) in Abhängigkeit der ausgewerteten Messsignale anzusteuern.

17. Verfahren zur Überwachung eines Ultraschall-Wandlersystems (1) mit den folgenden Verfahrensschritten:
A) Bereitstellen eines Ultraschall-Wandlersystems (1) nach einem der Ansprüche 1 bis 16;
B) Messtechnisches Überwachen des Wandlerelementes (3) mittels der Messeinheit (5) und Erzeugen von Messdaten;
C) Übermittlung der Messdaten von der Messeinheit (5) an die Analyseeinheit (8, 10);
D) Auswertung von Messdaten mittels der Analyseeinheit (8, 10).

18. Verfahren nach Anspruch 16 mit Verfahrensschritt
E) Erkennen und/oder Vorhersagen einer Veränderung eines Zustandes des Wandlerelementes (3) in Abhängigkeit der ausgewerteten Messdaten.

19. Verfahren nach Anspruch 17 oder 18, wobei
in Verfahrensschritt A) das Ultraschwall-Wandlersystem (1) in einer Ultraschall-Reinigungsanlage oder einer Ultraschall-Prozessanlage bereitgestellt wird und in einem Verfahrensschritt F) in Abhängigkeit der ausgewerteten Messdaten eine Prozesskenngröße der Ultraschall-Reinigungsanlage oder der Ultraschall-Prozessanlage ermittelt wird.
